# EUROPEAN PATENT APPLICATION

(11) **EP 4 620 809 A1**
(43) Date of publication of application: **24.09.2025**
(21) Application number: 22965466.0
(22) Date of filing: 16.11.2022
(51) Int. Cl.: B64C 27/22

(54) **MULTI-PROPELLER TILTING AIRCRAFT AND FLIGHT CONTROL METHOD THEREFOR**

(71) Applicant: Chengdu Nexfun Technology Co., Ltd., Chengdu, Sichuan 610000 (CN)
(72) Inventor: LIU, Zefeng, Chengdu, Sichuan 610000 (CN)
(74) Representative: ZHAOffice SPRL
(86) International application number: PCT/CN2022/132180
(87) International publication number: WO 2024/103278

(57) **Abstract**

Provided in the present application is a multi-propeller tilting aircraft and a flight control method therefor. The aircraft comprises a fuselage body, a left tilt wing fixed on the left side of the fuselage body, at least one left front power propeller and at least one left rear power propeller which are respectively fixed on two opposite sides of the left tilt wing, a right tilt wing fixed on the right side of the fuselage body, at least one right front power propeller and at least one right rear power propeller which are respectively fixed on two opposite sides of the right tilt wing, and a tail assembly fixed at the tail of the fuselage body. The tail assembly comprises a vertical tail, a horizontal tail and a horizontal tail rotor. The left front power propeller, the left rear power propeller, the right front power propeller and the right rear power propeller implement flight power and attitude control for the vertical takeoff and landing and cruising of the aircraft. The aircraft of the present application can tilt independently on the left and right sides and be actuated in various modes according to flight conditions; and implementing the present application can achieve vertical take-off and landing, high-speed cruising, and stable transition between vertical hovering and high-speed cruising, and is also highly economical in use.

## Description

### TECHNICAL FIELD

The present application relates to the field of the aircraft, and specially relates to a multi-propeller tilting aircraft and flight control method therefor.

### BACKGROUND

Amid global road traffic congestion, there is an urgent need to develop modern, compact manned civil aircraft capable of aerial mobility. Such aircraft must exhibit enhanced maneuverability, user-friendliness for non-professional pilots, operation without dedicated infrastructure (e.g., airports), and multiple safety redundancies.

Existing aircraft struggle to maintain stable flight attitudes during hovering or low-speed conditions. Furthermore, conventional designs typically tilt only the rotors or propellers, not the wingspan, and even if wingspan tilting is implemented, it involves the entire wingspan being tilted as a whole.

Thus, it is imperative to design a novel aircraft to address these limitations.

### SUMMARY

The objective of the present application is to provide a multi-propeller tilting aircraft with independently tiltable left and right modules and a corresponding flight control method, enabling vertical take-off and landing and high-speed cruise capabilities.

The present application provides a multi-propeller tilting aircraft, comprises a fuselage body, further comprises a left tilt wing fixed on a left side of the fuselage body, at least one left front power propeller and at least one left rear power propeller which are respectively fixed on two opposite sides of the left tilt wing, a right tilt wing fixed on a right side of the fuselage body, at least one right front power propeller and at least one right rear power propeller which are respectively fixed on two opposite sides of the right tilt wing, and a tail assembly fixed at the tail of the fuselage body ; the tail assembly comprises a vertical tail, a horizontal tail and a horizontal tail rotor ; wherein the left front power propeller, the left rear power propeller, the right front power propeller and the right rear power propeller implement flight power and attitude control for the vertical takeoff and landing and cruising of the aircraft.

Furthermore, the left front power propeller and the right front power propeller adopt positive pitches, the left rear power propeller and the right rear power propeller adopt reverse pitches; or the left front power propeller and the right front power propeller adopt reverse pitches, the left rear power propeller and the right rear power propeller adopt positive pitches.

Furthermore, the left front power propeller and the left rear power propeller adopt positive pitches, the right front power propeller and the right rear power propeller adopt reverse pitches; or the left front power propeller and the left rear power propeller adopt reverse pitches, the right front power propeller and the right rear power propeller adopt positive pitches.

Furthermore, the horizontal tail comprises a left horizontal tail located on the left side of a tail of the fuselage body, and a right horizontal tail fixed to the right side of the tail of the fuselage body, and the vertical tail is located between the left horizontal tail and the right horizontal tail.

Furthermore, further comprises a servo located within the fuselage body, wherein the left tilt wing and the right tilt wing are respectively connected to the servo by a shaft.

Furthermore, further comprises angle position sensors installed within the left folding wing, the right folding wing, the left tilt wing, and the right tilt wing.

Furthermore, the left front power propeller and the left rear power propeller are each equipped with two, the right front power propeller and the right rear power propeller are each equipped with two also; or the left front power propeller and the left rear power propeller are each equipped with four, the right front power propeller and the right rear power propeller are each equipped with four also.

Furthermore, further comprises a left folding wing fixed to an outer side of the left tilt wing and foldable relative to the left tilt wing, and a right folding wing fixed to an outer side of the right tilt wing and foldable relative to the right tilt wing.

The present application further provides a flight control method for the multi-propeller tilting aircraft, the method is as follows:
during vertical take-off and landing, the left front power propeller, the left rear power propeller, the right front power propeller and the right rear power propeller, along with the left tilt wing and the right tilt wing, maintain a vertical orientation relative to ground, the left front power propeller, the left rear power propeller, the right front power propeller and the right rear power propeller rotate at high speed to generate lift, causing the aircraft to ascend; during ascent, synchronous forward/backward tilting of the left tilt wing and the right tilt wing tilt enables forward/backward movement of the aircraft, while asynchronous tilting achieves rotation;
during cruise mode, the left tilt wing and the right tilt wing pivot to a horizontal position parallel to the ground, and the left front power propeller, the left rear power propeller, the right front power propeller and the right rear power propeller act as thrust sources, while lift is provided by the left tilt wing and the right tilt wing ; synchronous deflection of the left tilt wing and the right tilt wing adjusts lift, while asynchronous deflection induces roll motion; the horizontal tail rotor controls the aircraft's pitch and yaw attitude, and the vertical tail controls heading.

Furthermore, during vertical take-off and landing, a roll of the aircraft is achieved by a lift differential between the left front power propeller and the left rear power propeller and a lift differential between the right front power propeller and the right rear power propeller.

The aircraft of the present application can tilt independently on the left and right sides and be actuated in various modes according to flight conditions; and implementing the present application can achieve vertical take-off and landing, high-speed cruising, and stable transition between vertical hovering and high-speed cruising, and is also highly economical in use.

By reviewing the following detailed description of specific embodiments of the present application in conjunction with the accompanying drawings, those skilled in the art will better understand the aforementioned and other objectives, advantages, and features of the present application.

### BRIEF DESCRIPTION OF THE DRAWINGS

Specific embodiments of the present application will be described in detail below with reference to the drawings in an exemplary and non-limiting manner. Identical reference numerals in the drawings denote the same or similar components/parts. It should be understood by those skilled in the art that these drawings are not necessarily drawn to scale. In the drawings:
Figure 1 is a structural schematic diagram of the multi-propeller tilting aircraft used in the embodiment of the present application;
Figure 2 is a schematic diagram of one of the folding wings being folded in the multi-propeller tilting aircraft used in the embodiment of the present application.

### DETAILED DESCRIPTION OF THE PREFERRED EMBODIMENT

The present application relates to a multi-propeller tilting aircraft, whose power source is a rechargeable battery or fuel.

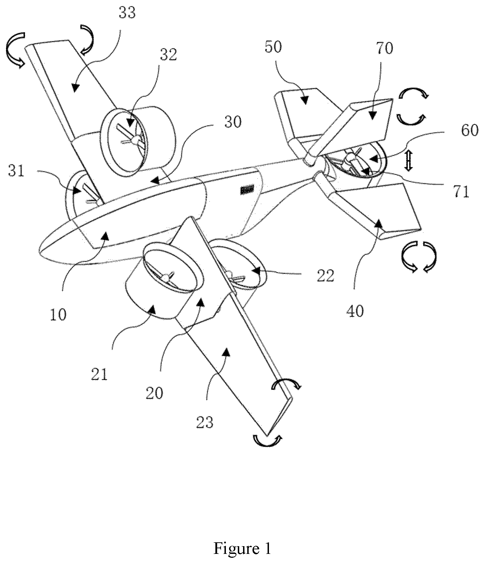

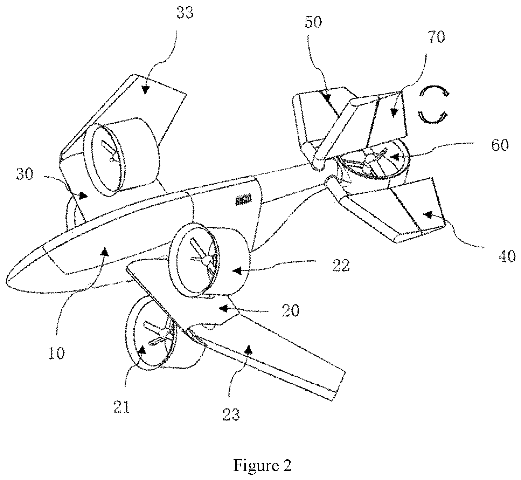

As shown in Figure 1 and 2, a multi-propeller tilting aircraft, comprises a fuselage body 10, a left tilt wing 20 fixed on a left side of the fuselage body 10, at least one left front power propeller 21 and at least one left rear power propeller 22 which are respectively fixed on two opposite sides of the left tilt wing 20, a right tilt wing 30 fixed on a right side of the fuselage body 10, at least one right front power propeller 31 and at least one right rear power propeller 32 which are respectively fixed on two opposite sides of the right tilt wing 30, and a tail assembly fixed at the tail of the fuselage body 10; the tail assembly comprises a vertical tail 70, a horizontal tail and a horizontal tail rotor 60; wherein the left front power propeller 21, the left rear power propeller 22, the right front power propeller 31 and the right rear power propeller 32 implement flight power and attitude control for the vertical takeoff and landing and cruising of the aircraft.

Wherein, the tail assembly comprises a left horizontal tail 40 located on the left side of a tail of the fuselage body 10, and a right horizontal tail 50 fixed to the right side of the tail of the fuselage body 10, a vertical tail 60 fixed on the tail of the fuselage body 10 and located between the left horizontal tail 40 and the right horizontal tail 50, a horizontal tail rotor 70 fixed on the tail of the fuselage body 10 and a plurality of tail rotor blades 71 mounted on the horizontal tail rotor 70.

The horizontal tail rotor 70 is horizontally mounted at the tail of the aircraft. The pitch of the tail rotor blades 71 is symmetrically adjustable in both positive and negative directions to achieve reversible bidirectional thrust. The tail rotor blades 71 consist of two or more blades, such as 3 blades, 4 blades, 5 blades, etc.

The left horizontal tail 40, the right horizontal tail 50, and the vertical tail 60 can deflect either as a whole unit or through partial control surface deflection.

The horizontal tail rotor 70 rotates at a constant speed. The pitch of the tail rotor blades 71 synchronizes with the movements of the left horizontal tail 40 and the right horizontal tail 50 to generate lift/thrust for attitude control. The left horizontal tail 40 and the right horizontal tail 50 are arranged laterally to avoid obstructing the airflow channel of the horizontal tail rotor 70.

The vertical tail 60 can deflect during the aircraft's cruise phase to correct heading deviations.

The left front power propeller 21, the left rear power propeller 22, the right front power propeller 31, and the right rear power propeller 32 all serve as power propellers. The left front power propeller 21 and the left rear power propeller 22 are fixed on opposite sides of the left tilt wing 20, while the right front power propeller 31 and the right rear power propeller 32 are fixed on opposite sides of the right tilt wing 30. These power propellers may be either ducted or opentype propellers.

The left front power propeller 21 and the right front power propeller 31 adopt positive pitches, the left rear power propeller 22 and the right rear power propeller 32 adopt reverse pitches; or the left front power propeller 21 and the right front power propeller 31 adopt reverse pitches, the left rear power propeller 22 and the right rear power propeller 32 adopt positive pitches, thereby canceling opposing torque. Alternatively, the left front power propeller 21 and the left rear power propeller 22 adopt positive pitches, the right front power propeller 31 and the right rear power propeller 32 adopt reverse pitches; or the left front power propeller 21 and the left rear power propeller 22 adopt reverse pitches, the right front power propeller 31 and the right rear power propeller 32 adopt positive pitches, achieving equivalent torque cancellation.

Thrust differentials between the left front power propeller 21 and the left rear power propeller 22, and between the right front power propeller 31 and the right rear power propeller 32 enable roll control during vertical takeoff/landing. Combined thrust differential between the left front power propeller 21 and the right front power propeller 31, and thrust differential between the left rear power propeller 22 and the right rear power propeller 32, coordinated with the left horizontal tail 40, the right horizontal tail 50, and the horizontal tail rotor 70, horizontal attitude control can be achieved.

The number of propellers on the left tilt wing 20 and right tilt wing 30 is not limited to two. Both the left tilt wing 20 and the right tilt wing 30 may alternatively carry four propellers each, provided they maintain symmetrical pairing on both sides-all such symmetrical configurations fall within the scope of this application.

Examples include: the left front power propeller 21 and the left rear power propeller 22 are each equipped with two, the right front power propeller 31 and the right rear power propeller 32 are each equipped with two also; or the left front power propeller 21 and the left rear power propeller 22 are each equipped with four, the right front power propeller 31 and the right rear power propeller 32 are each equipped with four also.

The left tilt wing 20 and the left folding wing 23 collectively form the left wingspan of the aircraft, while the right tilt wing 30 and the right folding wing 33 form the right wingspan. Both wingspans are capable of tilt and fold operations.

The folding wings of the aircraft serve not only for compact storage but also for energyefficient cruising.

The left folding wing 23 and right folding wing 33 are installed on the outer sides of the left tilt wing 20 and the right tilt wing 30, respectively, and synchronously tilt with their corresponding tilt-wings. During storage or high-speed cruising, they fold backward to reduce storage space or aerodynamic drag.

Notably, the folding wings are optional in the present application. Their absence does not compromise the technical efficacy of the application.

The aircraft of the present application further includes a servo (not shown) housed within the fuselage body 10. The left tilt wing 20 and the right tilt wing 30 are connected to the servo via respective shafts, enabling 360°axial rotation of the left tilt wing 20 and the right tilt wing 30 under the actuation of the servo. This rotation synchronizes the deflection of the left tilt wing 20, the right tilt wing 30, the left front power propeller 21, the left rear power propeller 22, the right front power propeller 31 and the right rear power propeller 32, which is utilized for vertical take-off and landing and cruise control of the aircraft.

The servo may be an electric servo or a hydraulic servo.

When the left tilt wing 20 and the right tilt wing 30 undergo asymmetric deflection, they are used for course correction during vertical take-off and landing and roll control during cruise.

The aircraft of the present application further includes angular position sensors (not shown), which are installed within the left folding wing 23, the right folding wing 33, the left tilt wing 20 and the right tilt wing 30, enabling the servo to precisely acquire the tilt or folding angles.

The flight control method of the aircraft in the present application is as follows (using four power propellers - specifically the left front power propeller 21, the left rear power propeller 22, the right front power propeller 31 and the right rear power propeller 32 - and one tail power propeller as examples):
During vertical takeoff and landing: All four power propellers (specifically the left front power propeller 21, the left rear power propeller 22, the right front power propeller 31 and the right rear power propeller 32) maintain a vertical position relative to the ground along with the left tilt wing 20 and the right tilt wing 30. The high-speed rotation of the four propellers generates lift to elevate the aircraft. During elevation, synchronized forward/backward tilting of the left tilt wing 20 and the right tilt wing 30 enables forward/backward movement, while asynchronous tilting facilitates rotation of the aircraft. The lift differential between the left front power propeller 21 and the left rear power propeller 22 and between the right front power propeller 31 and the right rear power propeller 32 enables rolling motion. Combined with the horizontal tail propeller 70, the lift differential between the left front power propeller 21 and the left rear power propeller 22, and the lift differential between the right front power propeller 31 and the right rear power propeller 32 allow mid-air attitude adjustments, enabling stable maintenance of special attitudes such as nose-up or nose-down positions regardless of flight status.

During cruise mode, the left tilt wing 20 and the right tilt wing 30 tilt to be parallel with the ground, converting the four power propellers into thrust propellers. Lift is then provided by the left tilt wing 20 and the right tilt wing 30. Synchronized tilting of the left tilt wing 20 and the right tilt wing 30 alters lift force, while asynchronous tilting achieves rolling motion. The horizontal tail propeller 70 controls the yaw attitude, and the vertical tail 60 maintains directional control.

Regarding the horizontal tail rotor 70, its functions include two aspects: active airflow control of the aircraft's attitude during hover and low-speed cruise, and when the aircraft encounters shifts in the forward and rear center of gravity, it actively provides additional upward or downward thrust to maintain balance.

Regarding the folding wings, due to the fact that the tilting wings used in this application are designed to be relatively wide for stability at low speeds, they create considerable drag during high-speed cruise. The backward folding of the wings reduces drag, thereby achieving higher flight efficiency. When the aircraft is stored in the hangar, the wings can fold to a larger angle, reducing the occupied ground area.

Implementation of safety redundancy: in cruising mode, this application allows for the failure of one or more power systems. The pilot can achieve gliding without power by controlling the wing span and the horizontal and vertical tail wings, which significantly increases flight safety in the event of abnormalities.

This application enables the aircraft to maintain various attitudes in any flight state: vertical takeoff and landing, horizontal hover, left and right wing tilt, horizontal cruise, nose-up hover, nose-down hover, nose-up cruise, and nose-down cruise.

In this application, the lift generated by the power propellers can be achieved either by altering the rotational speed or through fixed-speed blade pitch adjustment.

The horizontal tail rotor of this application has an adjustable pitch, both positive and negative, and works in coordination with the tilting wings, allowing the aircraft to maintain various attitudes in any flight state. Any existing aircraft is unable to achieve hovering or maintain stable varying flight attitudes under low-speed conditions. The wings tilt independently on the left and right, with various actuations depending on the flight conditions. The wings of the aircraft not only tilt but can also be folded. Implementing the present application can achieve vertical take-off and landing, high-speed cruising, and stable transition between vertical hovering and high-speed cruising, and is also highly economical in use.

At this point, those skilled in the art should recognize that, although this application has been described in detail with several exemplary embodiments, many other variations or modifications in accordance with the principles of this application can still be directly determined or derived from the disclosed content without departing from the spirit and scope of the application. Therefore, the scope of this application should be understood and construed to cover all such variations or modifications.

## Claims

1. A multi-propeller tilting aircraft, comprises a fuselage body (10), **characterized in that**, further comprises a left tilt wing (20) fixed on a left side of the fuselage body (10), at least one left front power propeller (21) and at least one left rear power propeller (22) which are respectively fixed on two opposite sides of the left tilt wing (20), a right tilt wing (30) fixed on a right side of the fuselage body (10), at least one right front power propeller (31) and at least one right rear power propeller (32) which are respectively fixed on two opposite sides of the right tilt wing (30), and a tail assembly fixed at the tail of the fuselage body (10); the tail assembly comprises a vertical tail (70), a horizontal tail and a horizontal tail rotor (60); wherein the left front power propeller (21), the left rear power propeller (22), the right front power propeller (31) and the right rear power propeller (32) implement flight power and attitude control for the vertical takeoff and landing and cruising of the aircraft.

2. The multi-propeller tilting aircraft according to claim 1, **characterized in that**, the left front power propeller (21) and the right front power propeller (31) adopt positive pitches, the left rear power propeller (22) and the right rear power propeller (32) adopt reverse pitches; or the left front power propeller (21) and the right front power propeller (31) adopt reverse pitches, the left rear power propeller (22) and the right rear power propeller (32) adopt positive pitches.

3. The multi-propeller tilting aircraft according to claim 1, **characterized in that**, the left front power propeller (21) and the left rear power propeller (22) adopt positive pitches, the right front power propeller (31) and the right rear power propeller (32) adopt reverse pitches; or the left front power propeller (21) and the left rear power propeller (22) adopt reverse pitches, the right front power propeller (31) and the right rear power propeller (32) adopt positive pitches.

4. The multi-propeller tilting aircraft according to claim 1, **characterized in that**, the horizontal tail comprises a left horizontal tail (40) located on the left side of a tail of the fuselage body (10), and a right horizontal tail (50) fixed to the right side of the tail of the fuselage body (10), and the vertical tail (60) is located between the left horizontal tail (40) and the right horizontal tail (50).

5. The multi-propeller tilting aircraft according to claim 1, **characterized in that**, further comprises a servo located within the fuselage body (10), wherein the left tilt wing (20) and the right tilt wing (30) are respectively connected to the servo by a shaft.

6. The multi-propeller tilting aircraft according to claim 1, **characterized in that**, the left front power propeller (21) and the left rear power propeller (22) are each equipped with two, the right front power propeller (31) and the right rear power propeller (32) are each equipped with two also; or the left front power propeller (21) and the left rear power propeller (22) are each equipped with four, the right front power propeller (31) and the right rear power propeller (32) are each equipped with four also.

7. The multi-propeller tilting aircraft according to claim 1, **characterized in that**, further comprises a left folding wing (23) fixed to an outer side of the left tilt wing (20) and foldable relative to the left tilt wing (20), and a right folding wing (33) fixed to an outer side of the right tilt wing (30) and foldable relative to the right tilt wing (30).

8. The multi-propeller tilting aircraft according to claim 7, **characterized in that**, further comprises angle position sensors installed within the left folding wing (23), the right folding wing (33), the left tilt wing (20), and the right tilt wing (30).

9. A flight control method for the multi-propeller tilting aircraft according to any one of claims 1-8, **characterized in that** the method is as follows:
during vertical take-off and landing, the left front power propeller (21), the left rear power propeller (22), the right front power propeller (31) and the right rear power propeller (32), along with the left tilt wing (20) and the right tilt wing (30), maintain a vertical orientation relative to ground, the left front power propeller (21), the left rear power propeller (22), the right front power propeller (31) and the right rear power propeller (32) rotate at high speed to generate lift, causing the aircraft to ascend; during ascent, synchronous forward/backward tilting of the left tilt wing (20) and the right tilt wing (30) tilt enables forward/backward movement of the aircraft, while asynchronous tilting achieves rotation;
during cruise mode, the left tilt wing (20) and the right tilt wing (30) pivot to a horizontal position parallel to the ground, and the left front power propeller (21), the left rear power propeller (22), the right front power propeller (31) and the right rear power propeller (32) act as thrust sources, while lift is provided by the left tilt wing (20) and the right tilt wing (30); synchronous deflection of the left tilt wing (20) and the right tilt wing (30) adjusts lift, while asynchronous deflection induces roll motion; the horizontal tail rotor (70) controls the aircraft's pitch and yaw attitude, and the vertical tail (60) controls heading.

10. The flight control method for the multi-propeller tilting aircraft according to claim 9, **characterized in that**, during vertical take-off and landing, a roll of the aircraft is achieved by a lift differential between the left front power propeller (21) and the left rear power propeller (22) and a lift differential between the right front power propeller (31) and the right rear power propeller (32).
